# EUROPEAN PATENT SPECIFICATION

(11) **EP 0 553 979 B1**
(45) Date of publication and mention of the grant of the patent: **20.05.1998**
(21) Application number: 93300314.7
(22) Date of filing: 19.01.1993
(51) Int. Cl.: G11B 23/087

(54) **Tape cassettes**
Bandkassetten
Cassettes à bande

(30) Priority: 29.01.1992 JP 13519/92
(43) Date of publication of application: 04.08.1993
(73) Proprietor: SONY CORPORATION, Tokyo 141 (JP)
(72) Inventor: Ota, Takashi, c/o Patents Division, Sony Corp., Tokyo 141 (JP)
(74) Representative: Purvis, William Michael Cameron

(56) References cited:
- GB-A- 2 150 532
- US-A- 3 754 696
- US-A- 4 097 006
- PATENT ABSTRACTS OF JAPAN vol. 068, no. 010 (P-437) 18 March 1986 & JP-A-60 205 884 (MATSUSHITA DENKI) 17 October 1985

## Description

The invention relates in general to audio and visual equipment, and more particularly to tape cassettes for such equipment, which have recording tape installed therein.

In the field of current audio and visual equipment, tape cassettes have been widely used for the reason of the ease with which they can be handled. They are usually constructed of plastics and have a recording tape installed therein.

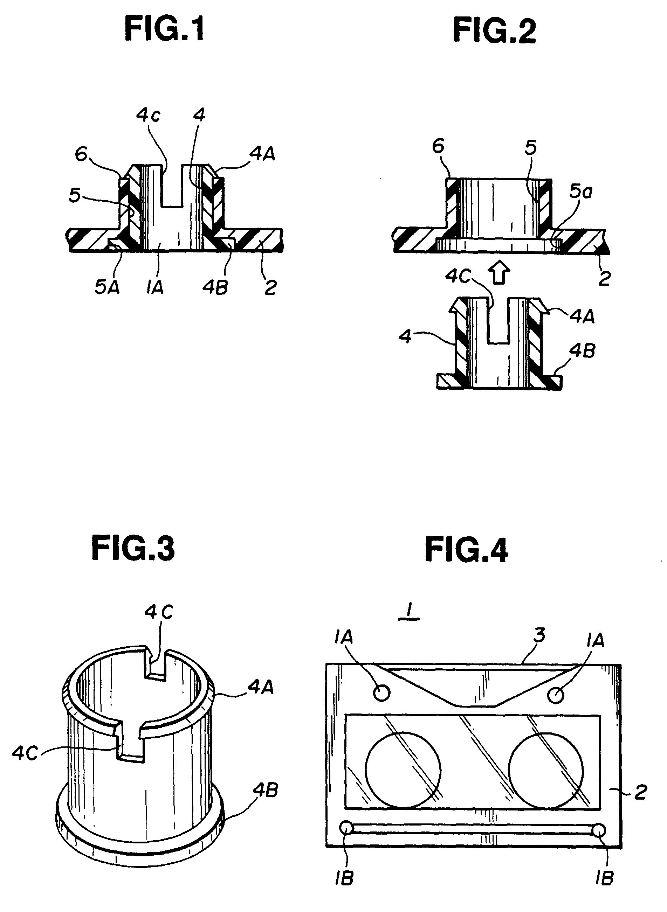

In order to clarify the present invention, a video tape cassette 1 of previously proposed kind will be discussed with reference to Figure 4 of the accompanying drawings.

In Figure 4 denoted by numeral 2 is a lower shell of the video tape cassette 1. Denoted by numeral 3 is a pivotal front lid of the tape cassette 1. The lower shell 2 is provided at its front side near the front lid 3 with two positioning openings 1A and 1A and at its rear side with two first positioning openings 1B and 1B. When the tape cassette 1 is put into a video tape cassette player, metal positioning pins of the player are inserted into the corresponding positioning and further positioning openings 1A, 1A, 1B and 1B to achieve positioning of the tape cassette 1 relative to the player.

However, hitherto, the durability of the positioning and further positioning openings 1A, 1A, 1B and 1B, more specifically, the durability of the lower shell 2 at the portions which define the openings 1A, 1A, 1B and 1B has been given little thought. In fact, after long use of the tape cassette, the opening defining portions of the lower cassette 2 have shown marked wear due to repeated sliding engagement between the positioning and further positioning openings 1A, 1A, 1B and 1B and the corresponding positioning pins of the player with the result that accurate positioning of the tape cassette 1 relative to the player is almost impossible.

United States Patent Number 4,097,006 discloses a two-part audio cassette which is provided with a number of casing apertures. These apertures are engageable with locating pins of a cassette player to locate the cassette correctly in the cassette player.

According to a first aspect of the invention, there is provided a tape cassette comprising: a cassette body (2) for housing a recording tape; at least one positioning opening (5) in the cassette body (2), the at least one positioning opening being engageable with at least one locating pin of a tape player correctly to locate the cassette in the player; characterised by an annular bearing member (4) provided in the at least one positioning opening (5) to reinforce that positioning opening.

The positioning openings of such a tape cassette can withstand repeated sliding engagement with the positioning metal pins of the player since each of the positioning openings of the tape cassette is reinforced by a bearing member.

The present invention is diagrammatically illustrated by way of example in the accompanying drawings, in which:
Figure 1 is an enlarged sectional view of a portion of a tape cassette according to the invention, in the form of an annular bearing member fitted in an opening of a lower shell;
Figure 2 is a view similar to Figure 1, but showing the annular bearing member separated from the lower shell;
Figure 3 is a perspective view of the annular bearing member; and
Figure 4 is a bottom view of a conventional tape cassette of previously proposed kind.

Referring to Figures 1 to 3, particularly Figs. 1 and 2, there is shown part of a lower shell of a tape cassette.

An upper shell (not shown) is fixed to the lower shell 2 to constitute a tape chamber therebetween. The lower and upper shells are constructed of plastic, such as acrylonitrile-butadiene-styrene, polystyrene or the like. As can be seen in Figure 2, the lower shell 2 is formed with collared openings 5 (only one is shown). Each opening 5 is formed with an enlarged bottom portion 5a, as shown.

A respective annular bearing member 4 is fitted in each collared opening 5 to form a reinforced positioning opening 1A. The annular bearing member 4 is constructed of a wear resistant and low sliding friction material, such as polyoxymethylene or the like. If desired, a metallic bearing member may be used. More specifically, the annular bearing member 4 is constructed of a material whose wear resistance is higher than that of the material of the lower shell 2, and whose sliding friction relative to the metal positioning pin is less than that of the material of the lower shell 2.

As can be seen from Figure 2 and 3, the annular bearing member 4 is formed with an arrow-shaped head portion 4A and an annular base flange 4B. The leading end portion of the annular bearing member 4 is formed at diametrically opposed positions with rectangular cuts 4C and 4C. As is seen from Figure 1, the base flange 4B is so sized as to match the enlarged bottom portion 5a of the collared opening 5 of the lower shell 2.

In coupling, the annular bearing 4 is inserted into the collared opening 5 from a back surface of the lower shell 2. This insertion is made prior to the fixing of the upper shell to the lower shell 2. Due to provision of the cuts 4C and 4C, during the insertion in the collared opening 5, the arrow-shaped head portion 4A is resiliently deformed inward. When the annular bearing member 4 is brought to a terminal position in the opening 5, the resiliently deformed arrow-shaped head portion 4A expands radially outward thereby to engage with the leading end of the collar portion 6 of the opening 5, and at the same time, the base flange 4B of the annular bearing member 4 is intimately fitted in the enlarged bottom portion 5a of the collared opening 5, as is seen from Figure 1. The annular bearing member 4 is thus latched to the collared opening 5.

As will be clear from the foregoing description, the positioning opening of the tape cassette is reinforced by a bearing member 4 which is constructed of a high wear resistant and less sliding friction material, such as polyoxymethylene, metal or the like. Accordingly, undesired marked wear of the positioning opening of the tape cassette will not occur, and thus, accurate positioning of the tape cassette relative to the player is ensured for a long time.

If desired, the annular bearing member 4 may be installed in the lower shell 2 by means of an integral moulding technique. In this case, the annular bearing member 4 is handled as an insert.

If desired, the annular bearing members 4 may be applied to selected ones of the openings 5 of the lower shell 2.

## Claims

1. A tape cassette comprising:
a cassette body (2) for housing a recording tape;
at least one positioning opening (5) in the cassette body (2), the at least one positioning opening being engageable with at least one locating pin of a tape player correctly to locate the cassette in the player; characterised by
an annular bearing member (4) provided in the at least one positioning opening (5) to reinforce that positioning opening (5).

2. A tape cassette according to Claim 1, wherein:
(i) the bearing member is of a material which has a greater wear resistance than the material of the cassette body; and
(ii) a coefficient of friction between the at least one locating pin and the at least one bearing member is less than a coefficient of friction between the at least one locating pin and the cassette body.

3. A tape cassette according to Claim 1 or Claim 2, wherein the bearing member is constructed of polyoxymethylene.

4. A tape cassette according to Claim 1 or Claim 2, wherein the bearing member is constructed of a metal.

5. A tape cassette according to any of claims 1 to 4, wherein the cassette body is constructed of acrylonitrile-butadiene-styrene.

6. A tape cassette according to any of claims 1 to 4, wherein the cassette body is constructed of polystyrene.

7. A tape cassette according to any of Claims 1 to 6, wherein the bearing member is snap-fitted in the at least one positioning opening.

8. A tape cassette according to any of Claims 1 to 6, wherein the bearing member is provided in at least one of the at least one positioning openings by an integral moulding technique.

9. A tape cassette according to Claim 8, wherein the bearing member serves as an insert during the integral moulding.

10. A tape cassette according to any preceding claim, in which the at least one positioning opening (5) is provided near a front lid pivotally connected to a front end of the cassette body (2).

11. A tape cassette according to any preceding claim, wherein the bearing member (4) comprises:
an tubular major portion;
an arrow-shaped head portion (4A) formed at a leading end of the tubular major portion, the arrow-shaped head portion (4A) being latched with a leading end of a collar portion of the positioning opening (5) when the bearing member (4) is provided in the at least one positioning opening; and
a flange portion (4B) formed at the other end of the tubular major portion, the flange portion being snugly received in an enlarged portion (5a) of the positioning opening (5) when the bearing member (4) is provided in the positioning opening.

12. A tape cassette according to Claim 11, wherein the head portion of the bearing member (4) is formed with rectangular channels at diametrically opposed portions thereof thereby to provide a desired flexibility to the bearing member major portion.

## Patentansprüche

1. Bandkassette, mit:
einem Kassettenkörper (2) zum Unterbringen eines Aufzeichnungsbandes;
zumindest einer Positionierungsöffnung (5) im Kassettenkörper (2), wobei die zumindest eine Positionierungsöffnung in zumindest einen Lokalisierungsstift des Bandabspielgeräts eingreifen kann, um die Kassette im Abspielgerät korrekt anzuordnen;
gekennzeichnet durch
ein ringförmiges Lagerteil (4), welches in der zumindest einen Positionierungsöffnung (5) vorgesehen ist, um diese Positionierungsöffnung (5) zu verstärken.

2. Bandkassette nach Anspruch 1, wobei:
(i) das Lagerteil aus einem Material besteht, welches einen größeren Abnutzungswiderstand als das Material des Kassettenkörpers hat; und
(ii) ein Reibungskoeffizient zwischen dem zumindest einen Lokalisierungsstift und dem zumindest einen Lagerteil kleiner ist als ein Reibungskoeffizient zwischen dem zumindest einen Lokalisierungsstift und dem Kassettenkörper.

3. Bandkassette nach Anspruch 1 oder 2, wobei das Lagerteil aus Polyoxymethylen besteht.

4. Bandkassette nach Anspruch 1 oder 2, wobei das Lagerteil aus einem Metall besteht.

5. Bandkassette nach einem der Ansprüche 1 bis 4, wobei der Kassettenkörper aus Akrylnitril-Butadien-Styrol besteht.

6. Bandkassette nach einem der Ansprüche 1 bis 4, wobei der Kassettenkörper aus Polystyrol besteht.

7. Bandkassette nach einem der Ansprüche 1 bis 6, wobei das Lagerteil in die zumindest eine Positionierungsöffnung schnappartig eingepaßt ist.

8. Bandkassette nach einem der Ansprüche 1 bis 6, wobei das Lagerteil in zumindest einer der zumindest einen Positionierungsöffnungen durch integrale Formungstechnik vorgesehen ist.

9. Bandkassette nach Anspruch 8, wobei das Lagerteil als Einführung während der integrierten Formung dient.

10. Bandkassette nach einem der vorhergehenden Ansprüche, bei der die zumindest eine Positionierungsöffnung (5) in der Nähe der Vorderklappe vorgesehen ist, die drehbar mit einem Vorderende des Kassettenkörpers (2) verbunden ist.

11. Bandkassette nach einem der vorhergehenden Ansprüche, wobei das Lagerteil (4) besitzt:
ein rohrförmiges Hauptteil;
ein bogenförmiges Kopfteil (4A), welches an einer Stirnseite des rohrförmigen Hauptteils gebildet ist, wobei das bogenförmige Kopfteil (4A) in eine Anfangsstirnseite eines Kragenteils der Positionierungsöffnung (5) einrastet, wenn das Lagerteil (4) in der zumindest einen Positionierungsöffnung vorgesehen ist; und
einen Flansch (4B), der am anderen Ende des rohrförmigen Hauptteils gebildet ist, wobei der Flansch eng in einem vergrößerten Bereich (5a) der Positionierungsöffnung (5) aufgenommen wird, wenn das Lagerteil (4) in der Positionierungsöffnung angeordnet ist.

12. Bandkassette nach Anspruch 11, wobei das Kopf des Lagerteils (4) rechteckige Kanäle an seinen diametral gegenüberliegenden Bereichen besitzt, um dadurch eine gewünschte Flexibilität gegenüber dem Lagerteil-Hauptteil bereitzustellen.

## Revendications

1. Cassette de bande comprenant :
un corps de cassette (2) servant à loger une bande d'enregistrement ;
au moins une ouverture de positionnement (5) formée dans le corps de cassette (2), la ou les ouvertures étant susceptibles de venir en prise de manière correcte avec une ou des tiges de positionnement d'un lecteur de bande de façon à positionner la cassette dans le lecteur ; caractérisée par :
un élément formant un palier annulaire (4) qui est placé dans l'ouverture de positionnement (5) pour renforcer cette ouverture de positionnement (5).

2. Cassette de bande selon la revendication 1, où :
(i) l'élément palier est fait d'un matériau qui présente une plus grande résistance à l'usure que le matériau du corps de cassette ; et
(ii) le coefficient de frottement entre la ou les tiges de positionnement et le ou les éléments paliers est inférieur au coefficient de frottement entre la ou les tiges de positionnement et le corps de cassette.

3. Cassette de bande selon la revendication 1 ou 2, où l'élément palier est constitué en polyoxyméthylène.

4. Cassette de bande selon la revendication 1 ou 2, où l'élément palier est constitué en un métal.

5. Cassette de bande selon l'une quelconque des revendications 1 à 4, où le corps de cassette est constitué en acrylonitrile-butadiène-styrène.

6. Cassette de bande selon l'une quelconque des revendications 1 à 4, où le corps de cassette est constitué en polystyrène.

7. Cassette de bande selon l'une quelconque des revendications 1 à 6, où l'élément palier s'ajuste par enclenchement brusque dans la ou les ouvertures de positionnement.

8. Cassette de bande selon l'une quelconque des revendications 1 à 6, où l'élément palier est placé dans l'ouverture de positionnement ou dans l'une au moins des ouvertures de positionnement par une technique de moulage solidaire.

9. Cassette de bande selon la revendication 8, où l'élément palier a un rôle de pièce rapportée pendant le moulage solidaire.

10. Cassette de bande selon l'une quelconque des revendications précédentes, dans laquelle la ou les ouvertures de positionnement (5) sont placées au voisinage d'un couvercle avant monté basculant sur une extrémité avant du corps de cassette (2).

11. Cassette de bande selon l'une quelconque des revendications précédentes, où l'élément palier (4) comprend :
une partie principale tubulaire ;
une partie tête en forme de flèche (4A) formée au niveau d'une extrémité antérieure de la partie principale tubulaire, la partie tête en forme de flèche (4A) étant verrouillée sur une extrémité antérieure d'une partie bague de l'ouverture de positionnement (5) lorsque l'élément palier (4) est placé dans l'ouverture de positionnement ; et
une partie rebord (4B) formée au niveau de l'autre extrémité de la partie principale tubulaire, la partie rebord étant reçue en ajustement serré dans une partie agrandie (5a) de l'ouverture de positionnement (5) lorsque l'élément palier (4) est placé dans l'ouverture de positionnement.

12. Cassette de bande selon la revendication 11, où la partie tête de l'élément palier (4) est dotée d'encoches rectangulaires au niveau de ses parties diamétralement opposées de manière à donner une souplesse voulue à la partie principale de l'élément palier.
